# EUROPÄISCHE PATENTSCHRIFT

(11) **EP 3 155 448 B1**
(45) Veröffentlichungstag und Bekanntmachung des Hinweises auf die Patenterteilung: **22.09.2021**
(21) Anmeldenummer: 15728821.8
(22) Anmeldetag: 08.06.2015
(51) Int. Cl.: G01S 17/02, B64C 27/08, B64C 39/02, B64D 47/08, G01S 17/42, G01S 7/00, G01S 7/481

(54) **BILDGEBENDE VORRICHTUNG MIT FLUGFÄHIGER TRAGEVORRICHTUNG**
IMAGING DEVICE HAVING AIRWORTHY CARRIER DEVICE
DISPOSITIF D'IMAGERIE COMPORTANT UN DISPOSITIF DE SUPPORT APTE À VOLER

(30) Priorität: 10.06.2014 DE 102014211050
(43) Veröffentlichungstag der Anmeldung: 19.04.2017
(73) Patentinhaber: FRAUNHOFER-GESELLSCHAFT zur Förderung der angewandten Forschung e.V., 80636 München (DE)
(72) Erfinder: REITERER, Alexander, 79106 Freiburg (DE); SCHWARZER, Stefan, 79100 Freiburg (DE)
(74) Vertreter: Pfenning, Meinig & Partner mbB
(86) Internationale Anmeldenummer: PCT/EP2015/062666
(87) Internationale Veröffentlichungsnummer: WO 2015/189126

(56) Entgegenhaltungen:
- US-A1- 2005 141 052
- Peter Dorninger ET AL: "Scan-Copter 2.0 a product of 4D-IT GmbH & von-oben e.U. High-Quality 3D Documentation supported by UAV Strength by Cooperation 3D Documentation Multimedia Applications Data Processing Sensor Integration UAV Development Professional Photographer Documentation Multimedia Productions", , 14. Mai 2014 (2014-05-14), XP055204327, Gefunden im Internet: URL:http://scan-copter.4d-it.com/SC_info.p df [gefunden am 2015-07-23]
- "scan-copter Datasheet", , 3. Mai 2014 (2014-05-03), XP055204359, Gefunden im Internet: URL:http://www.scan-copter.com/SC_datashee t.pdf [gefunden am 2015-07-23]

## Beschreibung

Die Erfindung betrifft eine bildgebende Vorrichtung, die eine flugfähige Tragevorrichtung aufweist und eine Oberfläche in einem großen Winkelbereich abbilden kann.

Im Stand der Technik sind Vorrichtungen zum Scannen von Oberflächen bekannt. Dabei wird von einem Punkt aus ein bestimmter Winkelbereich im Objektraum abgetastet. Bei scannenden Vorrichtungen wird hierzu eine Sichtrichtung einer bildgebenden Einheit über die zu vermessende Oberfläche geführt. Im einfachsten Fall wird hier die Sichtrichtung in einer Ebene abgelenkt, die als Scanebene bezeichnet werden kann. Auf diese Weise kann ein Profil der Oberfläche, beispielsweise ein Höhen-, Farb- oder Intensitätsprofil entlang und/oder eine Schnittlinie der Scanebene mit der Oberfläche vermessen werden. Die Scanebene kann dabei abhängig von der verwendeten Vorrichtung horizontal und/oder vertikal stehen.

Insbesondere solche Vorrichtungen, deren Scanebene vertikal steht, weisen im Stand der Technik normalerweise starke Beschränkungen des Winkelbereichs auf, in welchem die Sichtrichtung führbar ist. Derartige Beschränkungen entstehen beispielsweise dadurch, dass die Vorrichtung durch eine geeignete Struktur getragen werden muss, die normalerweise von einer vertikalen Scanebene geschnitten wird. Die tragende Vorrichtung begrenzt daher den Winkelbereich.

Die US 2014/0034776 A1 und die US 2014/0034775 A1 beschreiben eine Vorrichtung, die sich in der Luft und auf dem Boden bewegen kann und eine Ladung stabilisieren kann, wenn sie in Bewegung ist.

Die WO 2013/158050 A1 beschreibt ein Stabilisierungskontrollsystem für fliegende oder stationäre Plattformen.

Die DE 10 2004 050 376 A1 beschreibt ein Landschaftsscan-Verfahren zum Erfassen von Dächern und Seitenflächen.

Die US 4,543,603 beschreibt ein Aufklärungssystem, das ein fliegendes Gerät aufweist, welches um seine Längsachse rotiert.

Die DE 10 2008 014 853 A1 beschreibt ein Drehflügel-Fluggerät mit zumindest vier an Trägerelementen angeordneten Rotoren, die so angeordnet sind, dass entlang einer Längsachse des Drehflügelfluggerätes zumindest zwischen zwei endständigen Rotoren ein freies Sichtfeld definiert wird.

Peter Dorninger ET AL: "Scan-Copter 2.0 a product of 4D-IT GmbH & von-oben e.U. High-Quality 3D Documentation supported by UAV Strength by Cooperation 3D Documentation Multimedia Applications Data Processing Sensor Integration UAV Development Professional Photographer Documentation Multimedia Productions" beschreibt eine flugfähige Tragevorrichtung mit zwei Hälften wobei die zwei Hälften jeweils zumindest eine Vorrichtung zur Erzeugung einer Auftriebskraft aufweisen, sowie weiter aufweisend, eine bildgebende Einheit, die eine in einer Scanebene drehbare Sichtrichtung hat,wobei die bildgebende Einheit an der flugfähigen Tragevorrichtung so angeordnet ist, dass sich die zwei Hälften der Tragevorrichtung auf entgegengesetzten Seiten der Scanebene befinden, wobei die bildgebende Einheit einen Laserscanner der Firma Faro aufweist, mit dem ein in der Sichtrichtung strahlender Laserstrahl in der Scanebene emittierbar ist.

US 2005/141052 A1 beschreibt einen Laserscanner der Firma Faro der eine an einer ersten von zwei Hälften angeordnete Laserquelle aufweist, mit welcher der Laserstrahl in einer

Austrittsrichtung erzeugbar ist, die in einem nicht verschwindenden Winkel zur Scanebene steht, und wobei die Laserscaneinheit außerdem einen Spiegel als Ablenkeinheit aufweist, der in einem solchen Winkel zur Austrittsrichtung steht, dass mit diesem Spiegel der von der Laserquelle ausgesandte Laserstrahl in die Sichtrichtung in der Scanebene ablenkbar ist.

Aufgabe der vorliegenden Erfindung ist es, eine bildgebende Vorrichtung und ein entsprechendes Verfahren anzugeben, die eine scannende Vermessung einer Oberfläche in einem sehr großen Winkelbereich erlaubt.

Diese Aufgabe wird gelöst durch die bildgebende Vorrichtung nach Anspruch 1 sowie das Verfahren zur Vermessung einer Oberfläche nach Anspruch 14.

Die jeweiligen abhängigen Ansprüche geben vorteilhafte Weiterbildungen der bildgebenden Vorrichtung und des Verfahrens zur Vermessung einer Oberfläche gemäß der Erfindung an.

Eine erfindungsgemäße bildgebende Vorrichtung weist eine flugfähige Tragevorrichtung auf. Die flugfähige Tragevorrichtung weist zwei Hälften auf, die jeweils zumindest eine Vorrichtung zur Erzeugung einer Auftriebskraft enthalten.

Darüber hinaus weist die erfindungsgemäße bildgebende Vorrichtung eine bildgebende Einheit auf, die eine in einer Scanebene ablenkbare bzw. drehbare Sichtrichtung hat.

Erfindungsgemäß ist die bildgebende Einheit an der flugfähigen Tragevorrichtung so angeordnet, dass sich die zwei Hälften der flugfähigen Tragevorrichtung auf entgegengesetzten Seiten der Scanebene befinden. Durch diese Konstruktion kann eine Struktur vermieden werden, auf der die bildgebende Einheit abgestellt werden muss, und die normalerweise von der Scanebene geschnitten wird und dadurch den scanbaren Winkelbereich einschränkt.

Erfindungsgemäß sind die zwei Hälften der Tragevorrichtung mittels eines transparenten Zylinders miteinander so verbunden sind, dass die Sichtrichtung durch die Zylinderwand aus dem Zylinder austritt.

Dass die Sichtrichtung aus der bildgebenden Einheit austreten kann, bedeutet dabei, dass in dem genannten Winkelbereich sich entlang der Sichtrichtung ausbreitendes Licht nicht durch Strukturen der bildgebenden Vorrichtung unterbrochen, abgeschattet oder absorbiert wird. Dabei können jedoch optional Wellenlängen, die nicht zur Vermessung der Oberfläche verwendet werden, absorbiert werden. Entscheidend ist also nur, dass zumindest jene Wellenlängen, die zum Vermessen der Oberfläche verwendet werden, nicht gestört, abgeschattet oder absorbiert werden.

Die Sichtrichtung wird hier als vom Scheitelpunkt des genannten Winkelbereichs ausgehende Halbgerade verstanden. Sowohl Licht, das sich vom Scheitelpunkt wegbewegt als auch Licht, dass sich auf den Scheitelpunkt zubewegt, bewegt sich nach diesem Verständnis in der Sichtrichtung. Alternativ kann diese Halbgerade auch als Sichtgerade bezeichnet werden.

Dass sich die zwei Hälften der Tragevorrichtung auf entgegengesetzten Seiten der Scanebene befinden, bedeutet vorzugsweise, dass keine der beiden Hälften die Scanebene schneidet und besonders bevorzugt, dass kein Element der Tragevorrichtung, das für die zur Vermessung verwendeten Wellenlängen nicht transparent ist, die Scanebene schneidet. Sofern Strukturen der bildgebenden Vorrichtung die Scanebene schneiden, schatten sie vorzugsweise in der Scanebene einen Winkelbereich von kleiner 360° minus dem genannten Winkelbereich, in dem die Sichtrichtung austreten kann, ab. Auf diese Weise können Winkelbereiche, in denen die Sichtrichtung aus der bildgebenden Vorrichtung austreten kann, Werte von ≥320°, vorzugsweise ≥340°, und besonders bevorzugt von 360° in der Scanebene betragen.

In einer vorteilhaften Ausgestaltung kann die bildgebende Vorrichtung eine Ablenkeinheit aufweisen, mit welcher Licht, das aus der Sichtrichtung auf die Ablenkeinheit trifft, auf einen Lichtsensor ablenkbar ist und/oder mit der Licht, das aus einer Lichtquelle in der bildgebenden Vorrichtung abgestrahlt wird, in die Sichtrichtung ablenkbar ist. Vorzugsweise ist dabei der Lichtsensor und/oder die Lichtquelle gegenüber der bildgebenden Vorrichtung fest bzw. unbeweglich angeordnet. Die Ablenkeinheit kann beispielsweise einen Spiegel aufweisen, mittels dessen Licht wie oben beschrieben abgelenkt wird.

In einer vorteilhaften Ausgestaltung kann die bildgebende Einheit einen Laserscanner aufweisen, mit dem ein Laserstrahl in die Sichtrichtung emittierbar ist. Vorteilhafterweise ist darüber hinaus reflektierte Laserstrahlung, die aus der Sichtrichtung in den Laserscanner einfällt, detektierbar. Dass die Sichtrichtung in der Scanebene ablenkbar ist, bedeutet in diesem Fall also, dass der Laserstrahl und gegebenenfalls die Empfangsrichtung in der Scanebene ablenkbar ist.

Dass die Sichtrichtung in der Scanebene ablenkbar ist, bedeutet erfindungsgemäß, dass die bildgebende Einheit die Sichtrichtung verändern kann, wobei die Sichtrichtung stets in der Scanebene liegt. Vorzugsweise ist die Sichtrichtung dabei in alle Richtungen lenkbar, die innerhalb des genannten Winkelbereichs liegen.

In einer vorteilhaften Ausgestaltung der Erfindung kann die bildgebende Einheit eine Kamera als Lichtsensor aufweisen, mit der für eine gegebene Sichtrichtung aus einem Objektraum, in dessen Mitte die Sichtrichtung verläuft, eintreffendes Licht abbildbar ist.

Vorzugsweise sind die Vorrichtungen zur Erzeugung der Auftriebskraft so ausgestaltet und so steuerbar, dass die bildgebende Einheit und/oder die bildgebende Vorrichtung in einer festen Position haltbar ist, in der die Scanebene im Wesentlichen vertikal steht. Es ist jedoch auch möglich, dass die Vorrichtungen zur Erzeugung einer Auftriebskraft eine zeitlich konstante Auftriebskraft erzeugen und zumindest eine der beiden Hälften zumindest eine zusätzliche Vorrichtung aufweist, mit der die bildgebende Vorrichtung stabilisierbar und/oder so bewegbar ist, dass die Scanebene vertikal steht.

Zur Stabilisierung der bildgebenden Vorrichtung weist vorzugsweise jede der beiden Hälften eine Steuervorrichtung auf, mit welcher die durch die entsprechenden Vorrichtungen zur Erzeugung einer Auftriebskraft erzeugbare Auftriebskraft steuerbar ist und/oder mit der zusätzliche Vorrichtungen zur Stabilisierung und/oder Bewegung der bildgebenden Vorrichtung steuerbar sind. Vorzugsweise tragen dabei die Vorrichtungen zur Erzeugung einer Auftriebskraft beider Hälften zur Steuerung der bildgebenden Vorrichtung bei. Zur Koordinierung der Vorrichtungen zur Erzeugung einer Auftriebskraft der beiden Hälften weist die erfindungsgemäße bildgebende Vorrichtung vorzugsweise eine Kommunikationsvorrichtung auf, mit der Steuerinformationen zwischen den Steuervorrichtungen der zwei Hälften übertragbar sind. Alternativ ist es jedoch auch möglich, dass die beiden Hälften über geeignete Kommunikationsvorrichtungen unabhängig voneinander mit einer Kontrolleinrichtung kommunizieren, die selbst nicht Teil der bildgebenden Vorrichtung ist.

Ist eine Kommunikation der Steuervorrichtungen der beiden Hälften miteinander gewünscht, so kann die Kommunikationsvorrichtung beispielsweise ein Kabel umfassen, das die Steuervorrichtung der einen Hälfte mit der Steuervorrichtung der anderen Hälfte kontaktiert. Über dieses Kabel können dann Steuerinformationen zwischen den Steuervorrichtungen der beiden Hälften ausgetauscht werden. Vorzugsweise wird dabei ein zweipoliges Kabel verwendet, um weitere leitfähige Verbindungen zwischen den Hälften zu vermeiden.

Die Hälften können auch über elektromagnetische Signale miteinander kommunizieren. Hierzu kann die Kommunikationsvorrichtung einen an einer der Hälften angeordneten Sender für elektromagnetische Signale und einen an der anderen Hälfte angeordneten Empfänger für elektromagnetische Signale aufweisen. Besonders bevorzugt weisen beide Hälften je einen Empfänger und einen Sender auf, so dass wechselseitige Kommunikation möglich ist. Die elektromagnetischen Signale können beispielsweise Radiosignale, Lichtsignale oder Infrarotsignale sein.

Die Kommunikationsvorrichtung kann auch eine transparente Vorrichtung zur Datenübertragung zwischen der Steuervorrichtung der einen Hälfte und der Steuervorrichtung der anderen Hälfte aufweisen. Der transparente Zylinder kann zumindest auf einem Teil seines Umfangs um seine Zylinderachse ein leitfähiges transparentes Material aufweisen, wie beispielsweise ein transparentes leitfähiges Oxid, z.B. Indium-Zinn-Oxid. Es kann auch ein nicht leitfähiger transparenter Zylinder zumindest bereichsweise mit einem solchen transparenten leitfähigen Material beschichtet sein. Vorzugsweise wird auch hier eine zweipolige elektrische Verbindung zwischen den Steuervorrichtungen der beiden Hälften hergestellt.

In einer vorteilhaften Ausgestaltung der Erfindung kann die Vorrichtung zur Erzeugung einer Auftriebskraft jeder der beiden Hälften der bildgebenden Vorrichtung einen oder besonders bevorzugt zwei Rotoren aufweisen. Derartige Rotoren können beispielsweise mittels eines elektrischen Motors angetriebene Propeller sein.

Vorzugsweise weist jede der Hälften zwei Rotoren mit gleicher Größe auf. Hierdurch kann eine gleichmäßige Steuerung erzielt werden.

Bevorzugt stehen die Drehachsen aller Rotoren parallel zueinander oder sind in eine Position bringbar, in der sie parallel zueinanderstehen. Letztere Möglichkeit ist insbesondere dann relevant, wenn die Rotoren unabhängig voneinander kippbar sind, um eine horizontale Bewegung zu bewirken. Die Rotoren können jedoch auch starr ausgebildet sein, wobei eine horizontale Bewegung dadurch erzielbar ist, dass die Rotoren unterschiedliche Auftriebskräfte erzeugen.

Bevorzugterweise sind die Rotoren in einer gemeinsamen Ebene angeordnet. Ihre Rotationsebenen liegen also in einer gemeinsamen Ebene.

Vorteilhafterweise können die beiden Hälften eigene, voneinander unabhängige Energieversorgungen aufweisen. Es ist jedoch auch möglich, die Energieversorgungen in einer Hälfte anzuordnen und die andere Hälfte über eine elektrisch leitfähige Verbindung wie oben beschrieben mit Energie zu versorgen.

Abhängig von der Ausgestaltung der bildgebenden Einheit können mit der bildgebenden Vorrichtung ein Höhenprofil, ein Farbprofil und/oder ein Intensitätsprofil der zu vermessenden Oberfläche entlang einer Schnittlinie der zu vermessenden Oberfläche mit der Scanebene bestimmt werden. Ist die bildgebende Einheit ein Abstandssensor, wie beispielsweise ein Laserscanner, so kann ein Höhenprofil bestimmt werden. Ist der Sensor ein Sensor zur Messung einer Lichtintensität oder eine Kamera, so kann ein Farb- und/oder Intensitätsprofil der zu vermessenden Oberfläche entlang der Schnittlinie mit der Scanebene vermessen werden.

Ist die bildgebende Einheit ein Laserscanner, so kann dieser in einer vorteilhaften Ausgestaltung der Erfindung wie folgt realisiert werden. Es kann der Laserscanner eine an einer ersten der zwei Hälften angeordneten Laserquelle aufweisen, mit welcher ein Laserstrahl in einer bestimmten Richtung, als Austrittsrichtung bezeichnet, erzeugbar ist. Diese Austrittsrichtung kann in einem Winkel von ungleich Null zur Scanebene stehen. Bevorzugterweise steht die Austrittsrichtung in einem Winkel von 90° zur Scanebene. Darüber hinaus kann dann die Laserscaneinheit einen Spiegel als Ablenkeinheit aufweisen, der in einem solchen Winkel zur Austrittsrichtung des Laserstrahls aus der Laserquelle steht, dass durch diesen Spiegel der von der Laserquelle ausgehende Lichtstrahl in die Scanebene ablenkbar ist, so dass also der Strahl in der Scanebene verläuft. Steht die Austrittsrichtung wie oben beschrieben in einem Winkel von 90° zur Scanebene, so kann eine Spiegelfläche des Spiegels vorzugsweise in einem Winkel von 45° zur Scanebene und/oder zur Austrittsrichtung stehen. In dieser Ausführungsform kann der Winkelbereich in dem die Sichtrichtung drehbar ist, z.B. um die Austrittsachse des Lasers aus der Laserquelle definiert sein.

Ist die bildgebende Einheit ein Laserscanner, so ist es sehr vorteilhaft, wenn verhindert wird, dass von der Laserquelle erzeugtes Licht auf anderem Weg als durch Reflexion an der zu vermessenden Oberfläche in den Detektor des Laserscanners gelangen kann. Um ein Übertreten des von der Laserquelle erzeugten Lichtes in den Detektor zu verhindern, kann die erfindungsgemäße Vorrichtung beispielsweise zwei ringscheibenförmige Wände oder Lochblenden aufweisen, die mit zur Scanebene parallelen Flächen beiderseits der Scanebene in einem solchen Abstand abgeordnet sind, dass der Laserstrahl in der Scanebene zwischen den Wänden hindurchstrahlen kann. Ihr Abstand zueinander ist also vorzugsweise ungefähr gleich dem Durchmesser des Laserstrahls. Vorzugsweise befinden sich in radialer Richtung außerhalb des durch die Scheiben eingeschlossenen Bereichs keine weiteren Elemente der bildgebenden Vorrichtung. Es entsteht dadurch kein Streulicht, das an den Wänden vorbei in den Detektor gelangen könnte.

Die Trennung des ausgehenden Laserlichts von jenem von der Oberfläche reflektierten Laserlicht ist insbesondere vorteilhaft, wenn der Laserscanner ein Phasenvergleichsverfahren durchführt. Bei Pulslaufzeitverfahren ist eine derartige Trennung nicht erforderlich.

Wie oben beschrieben, kann die Ablenkeinheit ein Spiegel sein, mit dem aus der Sichtrichtung auf die Ablenkeinheit treffendes Licht auf den Lichtsensor ablenkbar ist und/oder mit dem aus einer Lichtquelle austretendes Licht in die Sichtrichtung ablenkbar ist. In einer bevorzugten Ausgestaltung der Erfindung kann der Spiegel an einem Motor angeordnet sein. Der Motor kann dann an einer der beiden Hälften angeordnet sein, so dass der Spiegel mittels des Motors um eine zur Scanebene senkrechte Achse drehbar ist, so dass die Sichtrichtung den Winkelbereich in der Scanebene durchläuft. Ist also die bildgebende Einheit ein Laserscanner, so kann die genannte Achse koaxial zur Austrittsrichtung des Laserstrahls aus der Laserquelle liegen, so dass der Laserstrahl den Winkelbereich in der Scanebene durchläuft.

Vorteilhafterweise weist die erfindungsgemäße Vorrichtung einen Detektor auf, mit dem von der zu vermessenden Oberfläche reflektierte Strahlung detektierbar ist. Ist die bildgebende Einheit ein Laserscanner, so kann mit dem Detektor die von der Laserquelle erzeugte und von der zu vermessenden Oberfläche reflektierte Laserstrahlung detektiert werden und hieraus ein Höhen- und/oder Intensitätsprofil bestimmt werden.

Ist die bilderzeugende Einheit eine Kamera oder ein Sensor zur Messung der Lichtintensität, so kann die reflektierte und gemessene Strahlung auch an der Oberfläche reflektiertes Umgebungslicht sein.

Weist, wie oben beschrieben, die bildgebende Vorrichtung eine Ablenkeinheit auf, so kann die von der zu vermessenden Oberfläche reflektierte Strahlung mittels der Ablenkeinheit auf den Sensor umgelenkt werden. Ausgehend von der zu vermessenden Oberfläche verläuft also in diesem Fall die Strahlung entlang der Sichtrichtung bis zur Ablenkeinheit und wird von dieser auf den Detektor umgelenkt.

Im Fall, dass die bildgebende Einheit ein Laserscanner ist, kann der Detektor in einer vorteilhaften Ausgestaltung an jener die Laserquelle aufweisende Hälfte der Tragevorrichtung angeordnet sein. Insbesondere kann er vorteilhafterweise Licht aus zur Austrittsrichtung des Laserstrahls paralleler Richtung empfangen. Diese Anordnung ermöglicht es, die Ablenkeinheit als einen einzigen Spiegel auszugestalten, mittels dessen sowohl der von der Laserquelle erzeugte Laserstrahl auf die zu vermessende Oberfläche ablenkbar ist als auch das von der Oberfläche reflektierte Licht auf den Sensor ablenkbar ist.

Vorteilhafterweise kann die bildgebende Vorrichtung eine lichtfokussierende Einheit, wie beispielsweise eine Linse, aufweisen, die mit zur Austrittsrichtung des Laserstrahls koaxial optischer Achse so angeordnet ist, dass der optische Detektor im Fokus der lichtfokussierenden Einheit angeordnet ist. Vorzugsweise liegen die Laserquelle und/oder der optische Detektor auf der optischen Achse, die durch die Linse definiert wird.

Wie oben bereits beschrieben, können die beiden Hälften der Tragevorrichtung mittels eines transparenten Zylinders mechanisch miteinander verbunden sein. Bevorzugterweise ist dieser Zylinder so angeordnet, dass die Sichtrichtung durch die Zylinderwand des Zylinders verläuft. Strahlung, die von der bilderzeugenden Einheit auf die zu vermessende Oberfläche gestrahlt wird oder von der zu vermessenden Oberfläche in die bilderzeugende Einheit eintritt, durchtritt also vorzugsweise den transparenten Zylinder für alle Winkellagen der Sichtrichtung in der Scanebene. Bevorzugterweise steht dabei eine Zylinderachse dieses transparenten Zylinders senkrecht auf der Scanebene und der Scheitelpunkt des genannten Winkelbereichs, also der Scheitelpunkt, um den die Sichtrichtung abgelenkt wird, liegt vorzugsweise auf der Zylinderachse. Hierdurch wird erreicht, dass der Einfluss des transparenten Zylinders für alle Winkel gleich ist. Dabei wird angenommen, dass vorzugsweise die Zylinderwand zumindest in jenem Bereich, wo sie die Scanebene schneidet, eine konstante Dicke und einen konstanten Brechungsindex hat.

In einer vorteilhaften Ausgestaltung der Erfindung kann der transparente Zylinder als Filter wirken, der nur für jene Wellenlängen oder Wellenlängenbereiche durchlässig ist, mit denen die Vermessung der Oberfläche erfolgen soll. Ist die bilderzeugende Einheit ein Laserscanner, so kann also vorteilhafterweise der Zylinder als Filter wirken, der nur für die von der Laserquelle erzeugten Wellenlängenbereiche durchlässig ist. Im Falle eines monochromen Lasers kann also der Zylinder als Filter ausgestaltet sein, der nur für die Laserwellenlänge durchlässig ist.

Die oben beschriebene Vorrichtung kann erfindungsgemäß in einem Verfahren zur Messung einer Oberfläche eingesetzt werden. Es wird hierbei dann die Oberfläche mittels einer wie vorstehend ausgestalteten bildgebenden Vorrichtung gescannt und aus durch die Oberfläche reflektiertem Licht ein Höhenprofil, ein Farbprofil und/oder ein Intensitätsprofil entlang einer Schnittlinie der Scanebene mit der Oberfläche bestimmt werden.

Ist die bildgebende Vorrichtung so ausgestaltet, dass der Winkelbereich, in dem die Sichtrichtung ungehindert aus der bildgebenden Vorrichtung austreten kann, kleiner als 360° ist, kann dennoch ein 360°-Profil der zu vermessenden Oberfläche entlang einer Schnittlinie mit jener Ebene, in der die Scanebene liegt, vermessen werden, wenn die bildgebende Vorrichtung um eine zur Scanebene senkrechte Achse gedreht wird. Wird die bildgebende Vorrichtung also um einen Winkel gedreht, der zumindest 360° minus dem Winkelbereich der bildgebenden Vorrichtung beträgt, kann ein vollständiges Rundumprofil von 360° aufgenommen werden. Eine Drehung um die zur Scanebene senkrechte Achse kann beispielsweise durch geeignete Ansteuerung der Vorrichtungen zur Erzeugung einer Auftriebskraft bewirkt werden.

Mit der erfindungsgemäßen bildgebenden Vorrichtung sind darüber hinaus auch flächige Profile erzeugbar, indem die Vorrichtung in eine zur Scanebene nicht parallele Richtung bewegt oder versetzt wird. Es kann hierbei also eine Vielzahl von linearen Höhenprofilen erzeugt werden, die zusammen ein flächiges Höhenprofil darstellen.

Es ist darüber hinaus auch möglich, die bildgebende Vorrichtung zur Erzeugung eines flächigen Profils um eine zur Scanebene nicht senkrechte Achse zu drehen. Hierdurch ist es möglich, eine die bildgebende Vorrichtung umgebende Oberfläche in einem Raumwinkelbereich um die bildgebende Vorrichtung zu vermessen. Insbesondere ist es hierdurch möglich, einen Raumwinkelbereich von 4π, also in alle Raumwinkel um die bildgebende Vorrichtung zu vermessen.

Im Folgenden soll die Erfindung anhand einiger Figuren beispielhaft erläutert werden. Gleiche Bezugszeichen kennzeichnen dabei gleiche oder entsprechende Merkmale. Die in den Figuren gezeigten Merkmale können dabei auch unabhängig von konkreten Merkmalen realisiert sein und zwischen verschiedenen Beispielen miteinander kombiniert werden.

### Es zeigt,

- Fig. 1: eine erfindungsgemäße bildgebende Vorrichtung mit einer Tragevorrichtung mit zwei Hälften, wobei eine Kommunikation zwischen den Hälften über eine Kabelverbindung erfolgt,
- Fig. 2: eine bildgebende Vorrichtung wie in Fig. 1 gezeigt, wobei die Kommunikation zwischen den zwei Hälften mittels transparenter Drähte erfolgt, und
- Fig. 3: eine bildgebende Vorrichtung wie in Fig. 1 gezeigt, wobei die Kommunikation zwischen den beiden Hälften über elektromagnetische Signale erfolgt.

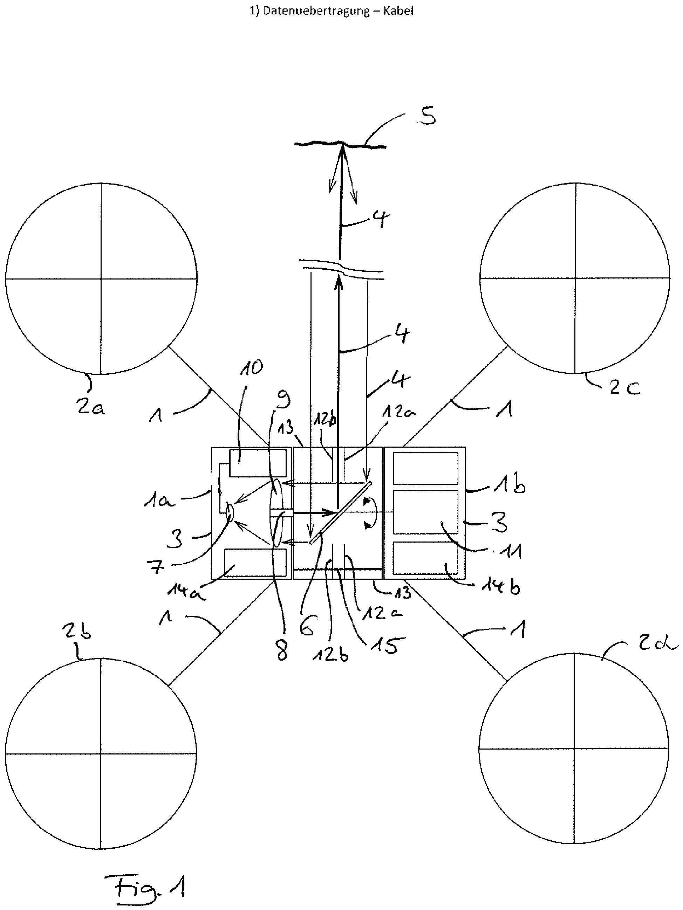

Fig. 1 zeigt eine erfindungsgemäße bildgebende Vorrichtung. Die bildgebende Vorrichtung weist eine flugfähige Tragevorrichtung 1 auf. Die flugfähige Tragevorrichtung 1 weist dabei zwei Hälften 1a und 1b auf, die jeweils zwei Vorrichtungen 2a, 2b, 2c und 2d zur Erzeugung einer Auftriebskraft aufweisen.

Die Vorrichtungen 2a, 2b, 2c, 2d zur Erzeugung einer Auftriebskraft sind hierbei als Rotoren gleicher Größe mit zueinander parallelen Drehachsen ausgestaltet, wobei Schnittpunkte der Drehachsen der Rotoren mit einer Ebene, in der die Rotoren 2a, 2b, 2c, 2d rotieren, ein Quadrat in dieser Ebene beschreiben.

Die erfindungsgemäße bildgebende Vorrichtung weist außerdem eine bildgebende Einheit 3 auf, die eine in einer Scanebene ablenkbare bzw. drehbare Sichtrichtung 4 hat. Die Scanebene steht im gezeigten Beispiel senkrecht auf der Figurenebene.

Die bildgebende Einheit 3 ist dabei an der flugfähigen Tragevorrichtung 1 so angeordnet, dass sich die zwei Hälften 1a, 1b der Tragevorrichtung 1 auf entgegengesetzten Seiten der Scanebene befinden und die Sichtrichtung 4 in einem Winkelbereich von zumindest 300° in der Scanebene aus der bildgebenden Vorrichtung austreten kann.

Die Sichtrichtung 4 trifft nach dem Austreten aus der bildgebenden Vorrichtung auf eine zu vermessende Oberfläche 5. Es ist mit der bildgebenden Vorrichtung also ein Profil der Oberfläche 5 entlang einer Schnittlinie der Oberfläche 5 mit der Scanebene vermessbar. Das Profil kann beispielsweise ein Höhenprofil, ein Helligkeitsprofil und/oder ein Farbprofil sein.

Im in Fig. 1 gezeigten Beispiel weist die bildgebende Vorrichtung eine Ablenkeinheit 6 auf, mit der aus der Sichtrichtung 4 auf die Ablenkeinheit 6 treffendes Licht auf einen Lichtsensor 7 ablenkbar ist. Zusätzlich oder alternativ kann durch eine solche Ablenkeinheit 6 auch aus einer Lichtquelle 8 austretendes Licht in die Sichtrichtung 4 ablenkbar sein. Im gezeigten Beispiel strahlt die Lichtquelle 8 beispielsweise einen Laserstrahl in eine zur Scanebene senkrechte Strahlrichtung auf die Ablenkvorrichtung 6 und wird durch diese in die Sichtrichtung 4 auf die Oberfläche 5 abgelenkt. Von der Oberfläche 5 reflektiertes Licht, das aus der Sichtrichtung 4 in die bildgebende Vorrichtung eintritt, wird durch dieselbe Ablenkeinheit 6 in zur Strahlrichtung der Laserquelle 8 parallele Richtung senkrecht zur Scanebene abgelenkt. Die Linse 9 fokussiert von der Ablenkeinheit 6 in Richtung parallel zu einer Achse senkrecht auf der Scanebene verlaufende Strahlung auf den Detektor 7. Aus dem vom Detektor 7 erzeugten Signal kann mittels einer Auswerteeinheit 10 ein Abstand zwischen der bildgebenden Vorrichtung und der zu vermessenden Oberfläche 5 an einem gegebenen Punkt bestimmt werden. Durch Drehung der Sichtrichtung 4 um eine zur Scanebene senkrechte Achse kann die Sichtrichtung 4 in verschiedene Richtungen in der Scanebene gelenkt werden und dadurch ein lineares Profil der Oberfläche 5 an einer Schnittlinie dieser Oberfläche 5 mit der Scanebene vermessen werden.

Im gezeigten Beispiel ist die Ablenkeinheit 6 als Spiegel ausgestaltet, dessen Spiegelfläche in einem Winkel von 45° zur Scanebene steht und in einem Winkel von 45° zu einer optischen Achse der Linse 9 und der Austrittsrichtung des Laserstrahls aus der Quelle 8 steht. Die optische Achse der Linse 9 und Sichtrichtung 4 stehen daher im gezeigten Beispiel in einem Winkel von 90° zueinander. Der Spiegel ist mittels eines Motors 11 um eine zur optischen Achse der Linse 9 und zur Austrittsrichtung des Lasers koaxiale Achse drehbar, wodurch die Sichtrichtung 4 gedreht wird.

Ist die bildgebende Einheit 3 ein Laserscanner, der ein Phasenvergleichsverfahren ausführt, so ist es vorteilhaft, wenn zwei ringscheibenförmige Trennwände oder Lochblenden 12a und 12b vorgesehen sind, die beidseitig der Scanebene angeordnet sind und deren Ringmittelpunkte auf jener Achse liegen, die durch die Austrittsrichtung des Lasers 8 definiert wird.

Im gezeigten Beispiel erstreckt sich der Spiegel 6 durch die Ringöffnungen der Lochblenden 12a und 12b. Der von der Laserquelle 8 erzeugte Laserstrahl trifft in der Scanebene auf den Spiegel 6 und wird von diesem zwischen den Wänden 12a und 12b hindurch in die Sichtrichtung 4 abgelenkt.

Im in Fig. 1 gezeigten Beispiel sind die beiden Hälften 1a und 1b der Tragevorrichtung erfindungsgemäß über einen transparenten Zylinder 13 miteinander verbunden, wobei die Sichtrichtung 4 eine Mantelfläche des Zylinders 13 durchtritt. Die Zylinderachse des Zylinders 13 liegt koaxial zur Austrittsrichtung des Laserstrahls aus der Laserquelle 8 und koaxial zur Drehachse des Spiegels 6. Der Zylinder kann optional als Filter ausgestaltet sein, der nur für jene Wellenlängen durchlässig ist, die zur Vermessung der Oberfläche 5 verwendet werden. Im Falle eines Laserscanners kann der transparente Zylinder 13 also insbesondere nur für die von der Laserquelle 8 erzeugten Wellenlängen transparent sein.

Im gezeigten Beispiel sind die Laserquelle 8 und der Detektor 7 in der gleichen Hälfte der flugfähigen Tragevorrichtung angeordnet. Auf diese Weise kann ein gemeinsamer Spiegel 6 für das austretende und das einfallende Licht verwendet werden.

Der Lichtsensor 7 kann auch eine Kamera sein bzw. zusammen mit der abbildenden Optik 9 eine Kamera bilden. In diesem Fall kann die Lichtquelle 8 entfallen. Auch die Trennwände 12a und 12b sind dann nicht erforderlich.

Im in Fig. 1 gezeigten Beispiel weist jede der zwei Hälften 1a und 1b der Tragevorrichtung 1 eine Steuervorrichtung 14a bzw. 14b auf, mit der die durch die entsprechende Vorrichtung 2a, 2b, 2c, 2d zur Erzeugung einer Auftriebskraft erzeugbare Auftriebskraft steuerbar ist. Darüber hinaus weist die in Fig. 1 gezeigte Vorrichtung eine Kommunikationsvorrichtung 15 auf, mit der Steuerinformationen zwischen den Steuervorrichtungen 14a und 14b der beiden Hälften 1a und 1b übertragbar sind. Im gezeigten Beispiel ist die Kommunikationsvorrichtung als Kabel 15 ausgestaltet. Eine leitfähige Verbindung zwischen den Steuervorrichtungen 14a und 14b kann jedoch beispielsweise auch dadurch erfolgen, dass der transparente Zylinder 13 zumindest bereichsweise ein transparentes leitfähiges Material, wie beispielsweise Indium-Zinn-Oxid, aufweist oder zumindest bereichsweise mit einem solchen Material zur Herstellung einer Verbindung beschichtet ist.

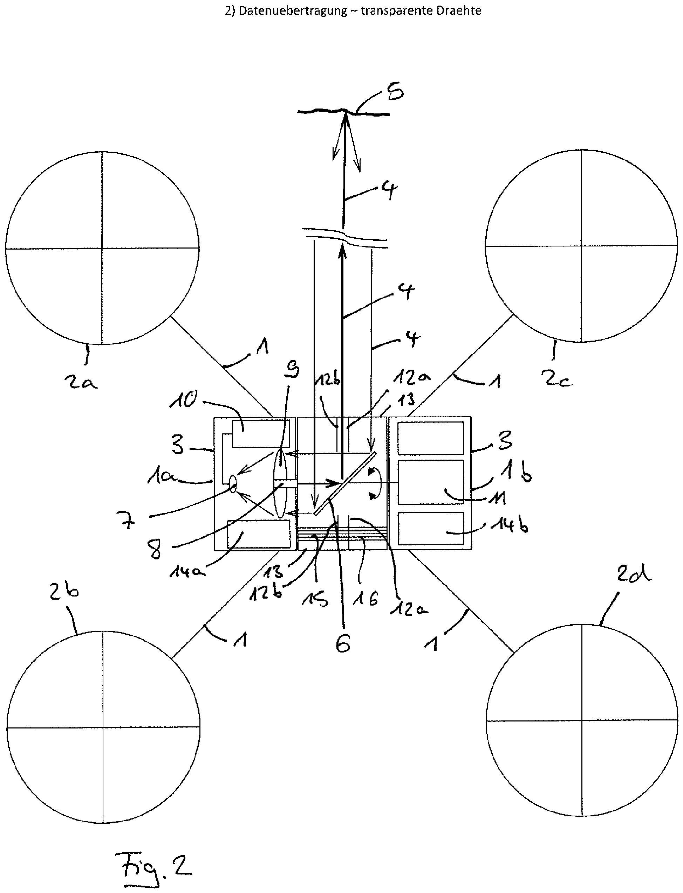

Fig. 2 zeigt eine erfindungsgemäße bildgebende Vorrichtung, die sich von der in Fig. 1 gezeigten Vorrichtung nur in der Kommunikationsvorrichtung 15 unterscheidet. Bezüglich aller anderen Merkmale wird daher auf die Beschreibung der Fig. 1 verwiesen.

Im in Fig. 2 gezeigten Beispiel ist die Kommunikationsvorrichtung 15 als transparente Drähte 16 ausgestaltet, über die elektrische Signale zwischen den Steuervorrichtungen 14a und 14b austauschbar sind. Zwar schneiden diese Drähte die Scanebene, sie behindern jedoch nicht den Scan, da sie transparent sind.

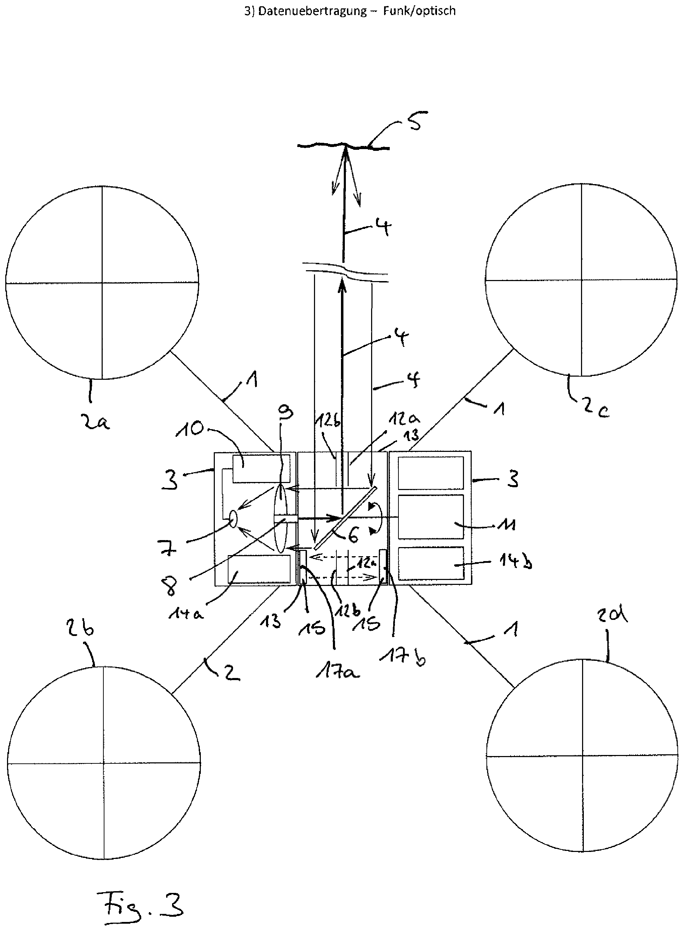

Fig. 3 zeigt eine weitere beispielhafte Ausgestaltung der erfindungsgemäßen bildgebenden Vorrichtung, die jenen in Fig. 1 und 2 gezeigten Vorrichtungen entspricht und sich nur durch die Kommunikationsvorrichtung 15 unterscheidet.

Im in Fig. 3 gezeigten Beispiel weist die Kommunikationsvorrichtung 15 einen an der einen Hälfte 1a der Tragevorrichtung angeordneten Sender und Empfänger 17a für elektromagnetische Signale und einen an der anderen Hälfte 1b angeordneten Sender und Empfänger 17b für elektromagnetische Signale auf. Die Steuervorrichtungen 14a und 14b der beiden Hälften 1a und 1b können mittels der elektromagnetischen Signale über die Sender/Empfänger 17a und 17b miteinander kommunizieren und dabei die Auftriebskräfte so steuern, dass die bildgebende Einheit in einer festen Position haltbar ist, in der die Scanebene vertikal steht. Die elektromagnetischen Signale können beispielsweise Lichtsignale, Infrarotsignale oder Funksignale sein.

Wie gezeigt, kann das erfindungsgemäße Gerät zwei Hälften aufweisen, die beide mit geeigneten Antriebseinheiten versehen sind. Das Gerät kann also ein Unmanned Arial Vehicle, UAV, oder ein Unmanned Aircraft System, UAS sein. Die beiden Hälften können Motor, Energieversorgung und partielle Steuerung aufweisen.

Der Ablenkspiegel 6 kann dabei an der einen Hälfte 1b angeordnet sein, während die Vorrichtungen zur Detektion von Licht 7 und Erzeugung von Licht 8 sowie die zugehörigen Auswerteelektroniken an der anderen Hälfte 1a angeordnet sind. Mittels eines Kollimators 9 kann eintretendes Licht parallelisiert werden, so dass das Licht kollinear zur Drehachse des Spiegels 6 auf diesen Spiegel 6 gelangt.

Der Detektor 7 liefert ein Signal, aus dem in der Auswerte-/Verarbeitungseinheit 10 eine Entfernungsinformation in digitaler Form extrahiert werden kann. In einer Speichereinheit kann dies zusammen mit weiteren Sensorinformationen, wie beispielsweise Lage und Position der bildgebenden Vorrichtung im Raum, zu einem dreidimensionalen Bild der Umgebung verarbeitet werden.

Der transparente Zylinder 13 kann vorteilhaft als spektraler Filter für die Messwellenlängen ausgestaltet sein, um den Einfluss von Umgebungslicht auf die Messung zu verringern. Es ist auch möglich, weitere mechanische Teile im Zylinder anzubringen, wie beispielsweise zwei parallele Lochblenden 12a und 12b, die der Trennung von austretendem Licht und einfallendem Licht dienen.

Vorzugsweise ist der Abstand der beiden Lochblenden 12a und 12b etwas größer als der Durchmesser des Laserstrahls. Das zentrale Loch der Blenden 12a und 12b ist vorzugsweise so gestaltet, dass der Planspiegel 6 darin rotieren kann.

Zur Erzeugung von flächigen Profilen ist es möglich, die erfindungsgemäße bildgebende Vorrichtung zu bewegen und/oder zu drehen. Hierbei wird aus Positionsinformationen über die Position der bildgebenden Vorrichtung einerseits und den gescannten Höhenprofilen andererseits die dreidimensionale Oberfläche ermittelt.

Die Kommunikation der Kommunikationsvorrichtung 15 kann vorteilhaft durch Funkübertragung oder mit optischen Mitteln erfolgen, um den Strahlengang der Messanordnung nicht zu stören. Die räumliche Anordnung kann dann flexibel gehalten werden und z.B. im Falle optischer Übertragung neben dem Planspiegel wie in der Fig. 2 gezeigt oder im Außenraum des Gerätes angeordnet sein oder über dikroische Elemente des Scanspiegels, z.B. in der Achse der Anordnung, und kombinierte Strahlengänge von Mess- und Kommunikationslicht, Hohlachse etc. erfolgen.

## Patentansprüche

1. Bildgebende Vorrichtung aufweisend
eine flugfähige Tragevorrichtung (1) mit zwei Hälften (1a, 1b), wobei die zwei Hälften (1a, 1b) jeweils zumindest eine Vorrichtung (2a, 2b, 2c, 2d) zur Erzeugung einer Auftriebskraft aufweisen,
sowie weiter aufweisend eine bildgebende Einheit (3), die eine in einer Scanebene drehbare Sichtrichtung (4) hat,
wobei die bildgebende Einheit (3) an der flugfähigen Tragevorrichtung (1) so angeordnet ist, dass sich die zwei Hälften (1a, 1b) der Tragevorrichtung (1) auf entgegengesetzten Seiten der Scanebene befinden, wobei die bildgebende Einheit (3) einen Laserscanner aufweist, mit dem ein in der Sichtrichtung (4) strahlender Laserstrahl in der Scanebene emittierbar ist
**dadurch gekennzeichnet, dass**
der Laserscanner eine an einer ersten der zwei Hälften (1a, 1b) angeordnete Laserquelle aufweist, mit welcher der Laserstrahl in einer Austrittsrichtung erzeugbar ist, die in einem nicht verschwindenden Winkel zur Scanebene steht, und
wobei die Laserscaneinheit außerdem einen Spiegel als Ablenkeinheit (6) aufweist, der in einem solchen Winkel zur Austrittsrichtung steht, dass mit diesem Spiegel der von der Laserquelle ausgesandte Laserstrahl in die Sichtrichtung (4) in der Scanebene ablenkbar ist
und
die zwei Hälften (1a, 1b) der Tragevorrichtung (1) mittels eines transparenten Zylinders (13) miteinander so verbunden sind, dass die Sichtrichtung (4) durch die Zylinderwand aus dem Zylinder (13) austritt.

2. Bildgebende Vorrichtung nach einem der vorhergehenden Ansprüche, weiter aufweisend eine Ablenkeinheit (6), mit der aus der Sichtrichtung (4) auf die Ablenkeinheit (6) treffendes Licht auf einen Lichtsensor (7) ablenkbar ist und/oder mit der aus einer Lichtquelle (8) austretendes Licht in die Sichtrichtung (4) ablenkbar ist.

3. Bildgebende Vorrichtung nach einem der Ansprüche 1 oder 2, wobei die bildgebende Einheit (3) eine Kamera als Lichtsensor (7) aufweist, mit der aus einem Objektraum, in dessen Mitte die Sichtrichtung (4) verläuft, eintreffendes Licht abbildbar ist.

4. Bildgebende Vorrichtung nach einem der vorhergehenden Ansprüche, wobei die Vorrichtungen zur Erzeugung einer Auftriebskraft so ausgestaltet und so steuerbar sind, dass die bildgebenden Einheit in einer festen Position haltbar ist, in der die Scanebene vertikal steht.

5. Bildgebende Vorrichtung nach einem der vorhergehenden Ansprüche, wobei jede der zwei Hälften (1a, 1b)eine Steuervorrichtung (14a, 14b)aufweist, mit welcher die durch die entsprechende Vorrichtung (2a, 2b, 2c, 2d) zur Erzeugung einer Auftriebskraft erzeugbare Auftriebskraft steuerbar ist,
wobei die bildgebende Vorrichtung außerdem eine Kommunikationsvorrichtung (15) aufweist, mit der Steuerinformationen zwischen den Steuervorrichtungen (14a, 14b) der zwei Hälften (1a, 1b) übertragbar sind.

6. Bildgebende Vorrichtung nach einem der Ansprüche 1 bis 5,
wobei der Laserscanner optische Trennwände aufweist, zwischen denen der Laserstrahl in der Sichtrichtung (4) austritt, und die so bemessen sind, dass keine Laserstrahlung, die nicht an der zu vermessenden Oberfläche (5) reflektiert wurde, auf den Lichtsensor (7) gelangen kann.

7. Bildgebende Vorrichtung nach dem vorhergehenden Anspruch,
wobei der Spiegel an einem Motor (11) angeordnet ist, welcher Motor (11) an der zweiten der zwei Hälften (1a, 1b)angeordnet ist, so dass der Spiegel mittels des Motor (11)s um eine zur Austrittsrichtung des Laserstrahls koaxiale Achse so drehbar ist, dass der Laserstrahl den Winkelbereich in der Scanebene durchläuft.

8. Bildgebende Vorrichtung nach einem der beiden vorhergehenden Ansprüche,
aufweisend einen Detektor, mit dem von einer zu vermessenden Oberfläche (5) reflektierte Strahlung detektierbar ist.

9. Bildgebende Vorrichtung nach dem vorhergehenden Anspruch,
wobei der Detektor an jener die Laserquelle aufweisenden Hälfte der Tragevorrichtung (1) angeordnet ist und Licht aus zur Austrittsrichtung des Laserstrahls paralleler Richtung empfängt.

10. Bildgebende Vorrichtung nach einem der vorhergehenden Ansprüche, ausweisend eine lichtfokussierende Einheit, vorzugsweise eine Linse (9), die mit zur Austrittsrichtung des Laserstrahls koaxialer optischer Achse so angeordnet ist, dass die Laserquelle und/oder der optische Detektor im Fokus der lichtfokussierenden Einheit angeordnet ist.

11. Bildgebende Vorrichtung nach einem der vorhergehenden Ansprüche, wobei transparente Zylinder (13) als Filter wirkt, der nur für jene Wellenlängen durchlässig ist, die der Laserstrahl aufweist.

12. Bildgebende Vorrichtung nach einem der vorhergehenden Ansprüche, wobei als Kommunikationsvorrichtung (15), mit der Steuerinformationen zwischen den Steuervorrichtungen (14a, 14b) der zwei Hälften (1a, 1b) übertragbar sind, der transparente Zylinder (13) zumindest bereichsweise mit einem leitfähigen transparenten Material beschichtet ist oder ein solches Material aufweist, wobei vorzugsweise das Material ein transparentes leitfähiges Oxid, besonders bevorzugt Indium-Zinn-Oxid, ist.

13. Bildgebende Vorrichtung nach einem der vorhergehenden Ansprüche, wobei die bildgebende Einheit so ausgestaltet ist, dass die Sichtrichtung (4) in einem Winkelbereich von zumindest 320 °, vorzugsweise von zumindest 340°, besonders bevorzugt von 360° in der Scanebene aus der bildgebenden Vorrichtung austreten kann.

14. Verfahren zur Vermessung einer Oberfläche (5),
wobei die Oberfläche (5) mittels einer bildgebenden Vorrichtung nach einem der vorhergehenden Ansprüche gescannt wird, und aus durch die Oberfläche (5) reflektiertem Licht ein Höhenprofil, ein Farbprofil und/oder ein Intensitätsprofil entlang einer Schnittlinie der Scanebene mit der Oberfläche (5) bestimmt wird.

15. Verfahren nach dem vorhergehenden Anspruch,
wobei die Sichtrichtung (4) zur Vermessung des Höhenprofils, des Farbprofils und/oder des Intensitätsprofiles in einer gegeben Scanebene um eine zur Scanebene senkrechte Achse gedreht wird, und das Höhenprofil, das Farbprofil und/oder das Intensitätsprofil in einem Winkelbereich von 360° in der Scanebene bestimmt wird.

16. Verfahren nach einem der beiden vorhergehenden Ansprüche,
wobei die bildgebenden Vorrichtung zur Vermessung des Höhenprofils, des Farbprofils und/oder des Intensitätsprofiles in eine zur Scanebene nicht parallele Richtung, vorzugsweise in eine zur Scanebene senkrechte Richtung, bewegt wird und ein flächiges Höhenprofil, Farbprofil und/oder Intensitätsprofil bestimmt wird.

17. Verfahren nach einem der drei vorhergehenden Ansprüche,
wobei die bildgebende Vorrichtung zur Vermessung des Höhenprofils, des Farbprofils und/oder des Intensitätsprofiles um eine in der Scanebene liegende Achse, vorzugsweise eine vertikale Achse, gedreht wird und ein flächiges Höhenprofil, Farbprofil und/oder Intensitätsprofil bestimmt wird.

## Claims

1. An imaging device, comprising:
a carrier device (1) capable of flying, including two halves (1a, 1b), each of the two halves (1a, 1b) comprising at least one device (2a, 2b, 2c, 2d) for generating a lift force,
and the carrier device furthermore comprising an imaging unit (3), which has a viewing direction (4) rotatable in a scanning plane,
the imaging unit (3) being arranged at the carrier device (1) capable of flying in such a way that the two halves (1a, 1b) of the carrier device (1) are located on opposite sides of the scanning plane, the imaging unit (3) comprising a laser scanner by way of which a laser beam radiating in the viewing direction (4) can be emitted in the scanning plane,
**characterized in that**
the laser scanner comprises a laser source which is arranged at a first of the two halves (1a, 1b) and by way of which the laser beam can be generated in an exit direction which is located at a non-vanishing angle with respect to the scanning plane, and
the laser scanning unit additionally comprising a mirror, serving as a deflection unit (6), which is located at such an angle with respect to the exit direction that the laser beam emitted by the laser source in the viewing direction (4) can be deflected in the scanning plane by way of this mirror,
and
the two halves (1a, 1b) of the carrier device (1) are connected to one another by means of a transparent cylinder (13) in such a way that the viewing direction (4) exits the cylinder (13) through the cylinder wall.

2. An imaging device according to any one of the preceding claims, furthermore comprising a deflection unit (6), by way of which light impinging on the deflection unit (6) from the viewing direction (4) can be deflected onto a light sensor (7), and/or light exiting a light source (8) can be deflected in the viewing direction (4).

3. The imaging device according to either claim 1 or 2,
wherein the imaging unit (3) comprises a camera, serving as the light sensor (7), by way of which light coming from an object space, in the center of which the viewing direction (4) extends, can be imaged.

4. An imaging device according to any one of the preceding claims,
wherein the devices for generating a lift force are configured and can be controlled in such a way that the imaging unit can be held in a fixed position in which the scanning plane is vertical.

5. An imaging device according to any one of the preceding claims,
wherein each of the two halves (1a, 1b) comprises a control device (14a, 14b), by way of which the lift force that can be generated by the corresponding device (2a, 2b, 2c, 2d) for generating a lift force can be controlled,
the imaging device additionally comprising a communication device (15), by way of which control information can be transmitted between the control devices (14a, 14b) of the two halves (1a, 1b).

6. An imaging device according to any one of claims 1 to 5,
wherein the laser scanner comprises optical partitions between which the laser beam exits in the viewing direction (4) and which are dimensioned in such a way that laser radiation that was not reflected at the surface (5) to be measured cannot reach the light sensor (7).

7. An imaging device according to the preceding claim,
wherein the mirror is arranged at a motor (11), the motor (11) being arranged at the second of the two halves (1a, 1b), so that the mirror can be rotated by means of the motor (11) about an axis that is coaxial to the exit direction of the laser beam in such a way that the laser beam passes through the angular range in the scanning plane.

8. The imaging device according to either one of the two preceding claims,
comprising a detector by way of which radiation reflected by a surface (5) to be measured can be detected.

9. An imaging device according to the preceding claim,
wherein the detector is arranged at the half of the carrier device (1) that comprises the laser source and receives light from a direction parallel to the exit direction of the laser beam.

10. An imaging device according to any one of the preceding claims, comprising a light-focusing unit, preferably a lens (9), which is arranged with an optical axis that is coaxial to the exit direction of the laser beam in such a way that the laser source and/or the optical detector are arranged in the focus of the light-focusing unit.

11. An imaging device according to any one of the preceding claims,
wherein transparent cylinders (13) act as a filter, which only allows those wavelengths to pass which the laser beam has.

12. An imaging device according to any one of the preceding claims, wherein, serving as the communication device (15) by way of which control information can be transmitted between the control devices (14a, 14b) of the two halves (1a, 1b), the transparent cylinder (13) is coated at least in regions with a conductive transparent material or comprises such a material, the material preferably being a transparent conductive oxide, and particularly preferably being indium tin oxide.

13. An imaging device according to any one of the preceding claims,
wherein the imaging unit is configured in such a way that the viewing direction (4) can exit the imaging device in an angular range of at least 320°, preferably of at least 340°, and particularly preferably of 360° in the scanning plane.

14. A method for measuring a surface (5),
wherein the surface (5) is scanned by means of an imaging device according to any one of the preceding claims, and an elevation profile, a color profile and/or an intensity profile along an intersecting line of the scanning plane with the surface (5) is determined from light reflected by the surface (5).

15. The method according to the preceding claim,
wherein the viewing direction (4) for measuring the elevation profile, the color profile and/or the intensity profile is rotated in a given scanning plane about an axis that is perpendicular to the scanning plane, and the elevation profile, the color profile and/or the intensity profile are determined in an angular range of 360° in the scanning plane.

16. The method according to either one of the two preceding claims,
wherein the imaging device, for measuring the elevation profile, the color profile and/or the intensity profile, is moved in a direction that is not parallel to the scanning plane, preferably in a direction that is perpendicular to the scanning plane, and a planar elevation profile, color profile and/or intensity profile are determined.

17. A method according to any one of the three preceding claims,
wherein the imaging device, for measuring the elevation profile, the color profile and/or the intensity profile, is rotated about an axis that is located in the scanning plane, preferably a vertical axis, and a planar elevation profile, color profile and/or intensity profile are determined.

## Revendications

1. Dispositif d'imagerie présentant
un dispositif de support (1) apte à voler avec deux moitiés (1a, 1b), dans lequel les deux moitiés (1a, 1b) présentent respectivement au moins un dispositif (2a, 2b, 2c, 2d) pour la production d'une force ascensionnelle,
ainsi que présentant en outre une unité d'imagerie (3), qui possède une direction de visualisation (4) pouvant tourner dans un plan de balayage,
dans lequel l'unité d'imagerie (3) est disposée sur le dispositif de support (1) apte à voler, de sorte que les deux moitiés (1a, 1b) du dispositif de support (1) se trouvent sur les faces opposées du plan de balayage, dans lequel l'unité d'imagerie (3) présente un balayeur laser, avec lequel un faisceau laser rayonnant dans la direction de visualisation (4) peut être émis dans le plan de balayage,
**caractérisé en ce que**
le balayeur laser présente une source laser disposée sur une première des deux moitiés (1a, 1b), avec laquelle le faisceau laser peut être produit dans une direction de sortie, qui se tient suivant un angle différent de zéro par rapport au plan de balayage, et
dans lequel l'unité de balayage laser présente en outre un miroir comme unité de déviation (6), qui se tient suivant un angle tel par rapport à la direction de sortie qu'avec ce miroir, le faisceau laser émis par la source laser peut être dévié dans la direction de visualisation (4) dans le plan de balayage
et
les deux moitiés (1a, 1b) du dispositif de support (1) sont reliées l'une à l'autre au moyen d'un cylindre (13) transparent, de sorte que la direction de visualisation (4) sort du cylindre (13) à travers la paroi de cylindre.

2. Dispositif d'imagerie selon l'une quelconque des revendications précédentes, présentant en outre une unité de déviation (6), avec laquelle la lumière incidente sur l'unité de déviation (6) à partir de la direction de visualisation (4) peut être déviée sur un capteur de lumière (7) et/ou avec laquelle la lumière sortant d'une source de lumière (8) peut être déviée dans la direction de visualisation (4).

3. Dispositif d'imagerie selon l'une quelconque des revendications 1 ou 2,
dans lequel l'unité d'imagerie (3) présente une caméra comme capteur de lumière (7), avec laquelle la lumière arrivant d'un espace objet, au centre duquel s'étend la direction de visualisation (4), peut être reproduite.

4. Dispositif d'imagerie selon l'une quelconque des revendications précédentes,
dans lequel les dispositifs pour la production d'une force ascensionnelle sont conçus et peuvent être commandés de sorte que l'unité d'imagerie peut être maintenue dans une position fixe, dans laquelle le plan de balayage se tient verticalement.

5. Dispositif d'imagerie selon l'une quelconque des revendications précédentes,
dans lequel chacune des deux moitiés (1a, 1b) présente un dispositif de commande (14a, 14b), avec lequel la force ascensionnelle pouvant être produite par le dispositif (2a, 2b, 2c, 2d) correspondant pour la production d'une force ascensionnelle peut être commandée,
dans lequel le dispositif d'imagerie présente en outre un dispositif de communication (15), avec lequel des informations de commande peuvent être transmises entre les dispositifs de commande (14a, 14b) des deux moitiés (1a, 1b).

6. Dispositif d'imagerie selon l'une quelconque des revendications 1 à 5,
dans lequel le balayeur laser présente des cloisons optiques, entre lesquelles le faisceau laser sort dans la direction de visualisation (4), et qui sont dimensionnées de sorte qu'aucun rayonnement laser qui n'a pas été réfléchi sur la surface (5) à mesurer ne peut parvenir sur le capteur de lumière (7).

7. Dispositif d'imagerie selon la revendication précédente,
dans lequel le miroir est disposé sur un moteur (11), lequel moteur (11) est disposé sur la deuxième des deux moitiés (1a, 1b), de sorte que le miroir peut tourner autour d'un axe coaxial par rapport à la direction de sortie du faisceau laser au moyen du moteur (11), de sorte que le faisceau laser traverse la plage angulaire dans le plan de balayage.

8. Dispositif d'imagerie selon l'une quelconque des deux revendications précédentes,
présentant un détecteur, avec lequel un rayonnement réfléchi par une surface (5) à mesurer peut être détecté.

9. Dispositif d'imagerie selon la revendication précédente,
dans lequel le détecteur est disposé sur la moitié du dispositif de support (1) présentant la source laser et reçoit la lumière provenant de la direction parallèle à la direction de sortie du faisceau laser.

10. Dispositif d'imagerie selon l'une quelconque des revendications précédentes, présentant une unité focalisant la lumière, de préférence une lentille (9), qui est disposée avec l'axe optique coaxial par rapport à la direction de sortie du faisceau laser, de sorte que la source laser et/ou le détecteur optique est disposé(e) dans le foyer de l'unité focalisant la lumière.

11. Dispositif d'imagerie selon l'une quelconque des revendications précédentes,
dans lequel le cylindre (13) transparent agit comme un filtre, qui ne laisse passer que les longueurs d'onde que le faisceau laser présente.

12. Dispositif d'imagerie selon l'une quelconque des revendications précédentes, dans lequel en tant que dispositif de communication (15), avec lequel des informations de commande peuvent être transmises entre les dispositifs de commande (14a, 14b) des deux moitiés (1a, 1b), le cylindre (13) transparent est revêtu au moins par endroits d'un matériau transparent conducteur ou présente un tel matériau, dans lequel de préférence le matériau est un oxyde conducteur transparent, de manière particulièrement préférée de l'oxyde d'indium et d'étain.

13. Dispositif d'imagerie selon l'une quelconque des revendications précédentes,
dans lequel l'unité d'imagerie est conçue de sorte que la direction de visualisation (4) peut sortir du dispositif d'imagerie dans une plage angulaire d'au moins 320°, de préférence d'au moins 340°, de manière particulièrement préférée de 360° dans le plan de balayage.

14. Procédé pour mesurer une surface (5),
dans lequel la surface (5) est balayée au moyen d'un dispositif d'imagerie selon l'une quelconque des revendications précédentes, et un profil de hauteur, un profil de couleur et/ou un profil d'intensité le long d'une ligne de coupe du plan de balayage avec la surface (5) est défini à partir de la lumière réfléchie par la surface (5).

15. Procédé selon la revendication précédente,
dans lequel la direction de visualisation (4), pour la mesure du profil de hauteur, du profil de couleur et/ou du profil d'intensité dans un plan de balayage donné, est amenée en rotation autour d'un axe perpendiculaire au plan de balayage, et le profil de hauteur, le profil de couleur et/ou le profil d'intensité sont définis dans une plage angulaire de 360° dans le plan de balayage.

16. Procédé selon l'une quelconque des deux revendications précédentes,
dans lequel le dispositif d'imagerie, pour la mesure du profil de hauteur, du profil de couleur et/ou du profil d'intensité, est déplacé dans une direction non parallèle au plan de balayage, de préférence dans une direction perpendiculaire au plan de balayage, et un profil de hauteur, profil de couleur et/ou profil d'intensité plan est défini.

17. Procédé selon l'une quelconque des trois revendications précédentes,
dans lequel le dispositif d'imagerie, pour la mesure du profil de hauteur, du profil de couleur et/ou du profil d'intensité, est amené en rotation autour d'un axe situé dans le plan de balayage, de préférence un axe vertical, et un profil de hauteur, profil de couleur et/ou profil d'intensité plan est défini.
